# EUROPEAN PATENT APPLICATION

(11) **EP 4 521 377 A2**
(43) Date of publication of application: **12.03.2025**
(21) Application number: 24214433.5
(22) Date of filing: 12.07.2023
(51) Int. Cl.: G08B 31/00

(54) **METHOD FOR OPTIMIZING THE PLACEMENT OF WATER LEVEL GAUGES, METHOD FOR PREDICTING WATER LEVELS IN MANHOLES, AND SYSTEM FOR PREDICTING WATER LEVELS IN MANHOLES**

(62) Divisional of application: 23741959.3
(71) Applicant: Japan Infrastructure Measurement Inc., Tokyo 170-0013 (JP)
(72) Inventor: HIGUCHI, Tetsuya, Tokyo, 1700013 (JP); KOYAMA, Yuki, Tokyo, 1700013 (JP)
(74) Representative: Herrero & Asociados, S.L.

(57) **Abstract**

[PROBLEM TO BE SOLVED] Predicting water levels in manholes more efficiently. [SOLUTION] A method for optimizing placements of water level gauges, comprising: a data acquisition step for acquiring respective water level data acquired by respective water level gauges installed in a plurality of manholes in a predetermined region; a classification step of classifying the plurality of manholes into one or more clusters by clustering the respective water level data; and a decision step to determine, for each cluster, one or more representative manholes from the plurality of manholes included in the one or more clusters.

## Description

### [TECHNICAL FIELD]

The present disclosure relates to a method for optimizing the placement of water level gauges, a method for predicting water levels in manholes, and a system for predicting water levels in manholes.

### [BACKGROUND ART]

In recent years, increased rainfall due to torrential rains and thunderstorms has caused water to overflow from manholes, resulting in flooding damage. Therefore, in areas where flooding is expected, it is necessary to measure the fluctuation (especially rise) of water levels in manholes in real time and to predict flooding. For example, Patent Literature 1 discloses technology for predicting water levels in sewage trunk lines and at pumping stations, and water levels and inflows at pumping stations using information such as the amount of rainfall.

### [PRIOT ART LIST]

### [Patent Literature]

[Patent Literature 1] JP2002285634A

### [SUMMARY OF THE INVENTION]

### [TECHNICAL PROBLEM]

However, the technology described in Patent Literature 1 is only a prediction of the inflow to the pumping station and is based on the assumption that information on the water level in the sewer pipe is used. Therefore, it cannot predict overflows to the ground. In addition, for the prediction of water overflow to the ground, it is necessary to monitor the water level in manholes, which are spaces connecting sewage pipes to the ground. However, since there are many manholes, it is necessary to install many water level gauges to monitor the water levels of all manholes and predict water level fluctuations, which is difficult to achieve.

Therefore, the present disclosure was made in view of the above problem, and the object of the present disclosure is to provide a new and improved method for optimizing the placement of water level gauges, a method for predicting water levels in manholes, and a system for predicting water levels in manholes, which can more efficiently predict water levels in manholes.

### [TECHNICAL SOLUTION]

To solve the above problem, according to an aspect of the present disclosure, a method for optimizing the placement of water level gauges comprises the steps of: acquiring data to acquire respective water level data acquired by respective water level gauges installed in a plurality of manholes in a predetermined area; a classification to classify the plurality of manholes into one or more clusters by clustering the respective water level data; a determination to determine one or more representative manholes for each cluster from a plurality of manholes included in the one or more clusters.

In order to solve the above problem, according to another aspect of the present disclosure, a method is provided for predicting a water level of a manhole, comprising: a past data acquisition step for acquiring past time-series water level data of one manhole installed in a predetermined area and predicted rainfall data pertaining to the predetermined area; and an output step for outputting predicted information on the water level of the one manhole at a future point in time by inputting the acquired past time-series water level data of the one manhole and the predicted rainfall data into a predetermined engine.

In order to solve the above problem, according to another aspect of the present disclosure, a system is provided for predicting water level of a manhole, comprising: a past data acquisition unit for acquiring past time-series water level data of one manhole included in a target area and predicted rainfall data pertaining to the target area; and an output unit for outputting predicted information on the water level of the manhole at a future point in time by inputting the acquired past time-series water level data of the manhole and the predicted rainfall data into a predetermined engine.

### [ADVANTAGEOUS EFFECTS]

As explained above, the present disclosure enables more efficient prediction of water levels in manholes.

### [BRIEF DESCRIPTION OF THE DRAWINGS]

FIG. 1 is an illustration that provides an overview of the information processing system of this embodiment.
FIG. 2 shows a block diagram showing an example of the functional configuration of the server 10 for the first embodiment of this disclosure.
FIG. 3 shows an example of a clustering process of manholes 4 by a classification unit 102.
FIG. 4 shows an example of the result of the clustering process by the classification section 102 in this embodiment.
FIG. 5 shows an example of the result of the clustering process by the classification section 102 in this embodiment.
FIG. 6 shows a flowchart of an example of the flow of the optimization process of the placement of water level gauges by the server 10 in this embodiment.
FIG. 7 shows a block diagram of an example of the functional configuration of the server 10 for the second embodiment of this disclosure.
FIG. 8 shows an overview of the process of calculating the predicted value of the water level by the learning engine 112 in this embodiment.
FIG. 9 shows a flowchart of an example of the flow of the process of predicting the water level of a manhole by the server 10 for this embodiment.
FIG. 10 shows a graph of an example of this embodiment.
FIG. 11 shows an example of the hardware configuration of the server 10 for this embodiment.

### [DETAILED DESCRIPTION OF THE EMBODIMENTS]

The following is a detailed description of a suitable embodiment of this disclosure with reference to the accompanying drawings. In this specification and the drawings, duplicate descriptions are omitted by attaching the same symbols to comprise elements that have substantially the same functional configuration.

In this specification and the drawings, each manhole is distinguished as necessary, such as representative manhole 4A for the representative manhole described below, and manhole 4B for the other manholes. However, when it is not necessary to distinguish each manhole in particular, each manhole is simply referred to as manhole 4.

One embodiment of this disclosure relates to an information processing system capable of efficiently predicting water levels in manholes. Such a system can be used, for example, to predict water levels in manholes and to predict in advance flood damage due to manhole overflows to the ground. As a conventional technology, such a stormwater management system for sewerage systems combines the weather conditions of the area to be monitored, a short-time rainfall prediction model, and a rainwater runoff analysis model for the area to be monitored. However, such systems do not guarantee the accuracy of the runoff analysis model due to topographical changes, urban development, construction, and other factors. In addition, such systems are only suitable for static analysis such as hazard maps, but it is difficult to predict flooding in real time. In order to achieve real-time monitoring, technology for sequential prediction of water levels in manholes is required.

However, conventional systems for measuring water levels in sewer pipes in real time, such as smart manholes, which are devices that integrate a water level meter and a wireless transmission system in a manhole, are very expensive. Therefore, it is not realistic to install such a system in all of a large number of manholes. In this embodiment of the method for optimizing the placement of water level gauges, which manholes among the manholes in a given area should be placed with water level gauges is optimized by using a clustering method. A cluster here refers to a cluster of manholes in which all manholes in the cluster have similar water level changes over time. Therefore, water levels in other manholes in the same cluster can be estimated by a simple calculation. This makes it possible to cover the anticipated inundation area with a minimum placement of water level gauges (which are expensive because of their wireless transmission capability). In addition, by inputting the time-series water level data obtained from the placement of water level gauges optimized in this way and the predicted rainfall information for a short time ahead into a pre-trained water level prediction engine, the predicted water level of the manhole can be output. This makes it possible to predict inundation of anticipated inundation areas with high accuracy using a limited number of water level gauges.

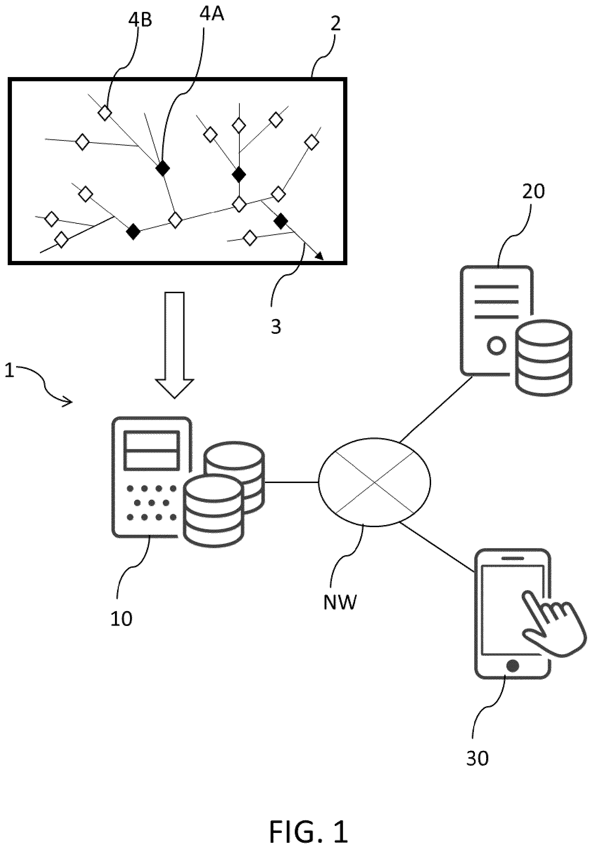

FIG. 1 is an illustration of the information processing system of this embodiment. This embodiment of the information processing system 1 has a server 10, as shown in FIG. 1, for example. This embodiment of the information processing system 1 can be used, for example, through other servers 20 and information terminals 30.

Server 10, other server 20, and information terminal 30 are connected to each other via a network.

The server 10 in this embodiment is a server for predicting the water level of each manhole 4 in the water level prediction target area 2 that includes a plurality of manholes 4 within the area. Specifically, the server 10 acquires past water level data, etc. of some manholes 4 (representative manhole 4A in the example shown in FIG. 1) of the plurality of manholes 4 provided in the sewer pipe 3 in the water level prediction target area 2, inputs the acquired data to the learning engine, outputs the prediction information on the water level of the manhole 4 output from the learning engine. Server 10 outputs the prediction information to other servers 20 and information terminals 30, for example. The type of sewer pipe 3 is not limited, and the sewer pipe 3 may be a rainwater pipe, a sewage pipe, or a combined sewer pipe.

The server 10 can be a computer or other hardware such as those comprising the hardware described below. The hardware that realizes server 10 and the manner in which the hardware is installed (e.g., whether it is a stationary server or a processor in an edge device) are not limited and can be realized by one or more computers or servers. The same is true for the hardware that realizes the other servers 20. The hardware realizing the information terminal 30 may be a computer or server, or it may be realized by any terminal, such as a smartphone, cell phone, tablet, laptop, game console, etc.

The other server 20 and information terminal 30 are examples of information processors used, for example, to obtain and utilize predictive information about water levels in manholes. The other servers 20 and information terminals 30 may be, for example, owned by a national or municipal authority on sewage systems, or they may be used by ordinary users. Such forecast information can be used, for example, to take measures to prevent flooding in the water level prediction target area 2 or to notify residents and others of the possibility of flooding.

As described below, the server 10 may have other functions, or additionally, to determine which of the manholes 4 included in the water level prediction target area 2 should have water level gauges installed at all times. When many manholes 4 are provided in the water level prediction target area 2, it may be difficult in some cases to install water level gauges in all of them due to cost or equipment constraints. On the other hand, if water level gauges are not installed in appropriate manholes 4, there are cases in which predicting water levels in manholes 4 becomes difficult. Therefore, the server 10 of one embodiment can optimize which of the limited number of water level gauges should be installed in which of the manholes 4 in the water level prediction target area 2. This enables more accurate prediction of water levels in manholes 4 within the constraints related to the installation of water level gauges.

The first embodiment below describes an example of a method of optimizing the placement of water level gauges by server 10. The second embodiment describes an example of a method of predicting water levels in manholes by server 10. These embodiments may be realized by the same server 10 or by different servers.

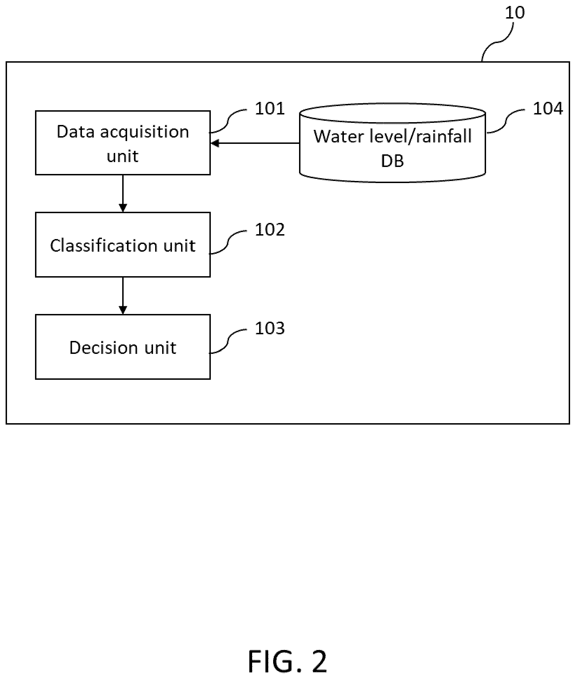

FIG. 2 is a block diagram showing an example of the functional configuration of the server 10 for the first embodiment of this disclosure. As shown in FIG. 2, the server 10 for this embodiment has a data acquisition unit 101, a classification unit 102, a decision unit 103, and a water level/rainfall DB (database) 104.

The data acquisition unit 101 has the function of acquiring respective water level data acquired by respective water level gauges installed in a plurality of manholes in a given area. For example, the data acquisition unit 101 can acquire water level data accumulated in the past from the water level/rainfall DB 104 or an external server. The water level data here is time series water level data. The time-series water level data is, for example, water level data acquired continuously or intermittently over a period of several months.

Water level data may be obtained from water level gauges installed in manholes 4 within the water level prediction target area 2. The type of water level gauge is not limited in terms of installation and can be used to continuously or intermittently acquire the water level in the manhole.

The data acquisition unit 101 may also acquire data on precipitation associated with manholes. The precipitation data associated with manholes may be, for example, past precipitation data provided by an organization such as the Japan Meteorological Agency in the area to which the water level prediction target area 2 in which manhole 4 is installed belongs, or precipitation data based on a water gauge installed in the water level prediction target area 2.

The classification unit 102 has the function of classifying the plurality of manholes into one or more clusters by performing clustering on the respective water level data. The classification unit 102 classifies the plurality of manholes4 into one or more clusters using, for example, hierarchical clustering. Here, the classification unit 102 determines one or more representative manholes for each cluster based on the proximity by hierarchical clustering. Proximity means, for example, the approximation of the temporal variation of the water level. In other words, if some of the time-series changes of the water level are similar to some extent, the clustering process determines that the approximation is high. The threshold value can be determined in the clustering process. The clustering method is not limited, but a method that can evaluate the distance within or between clusters is preferred.

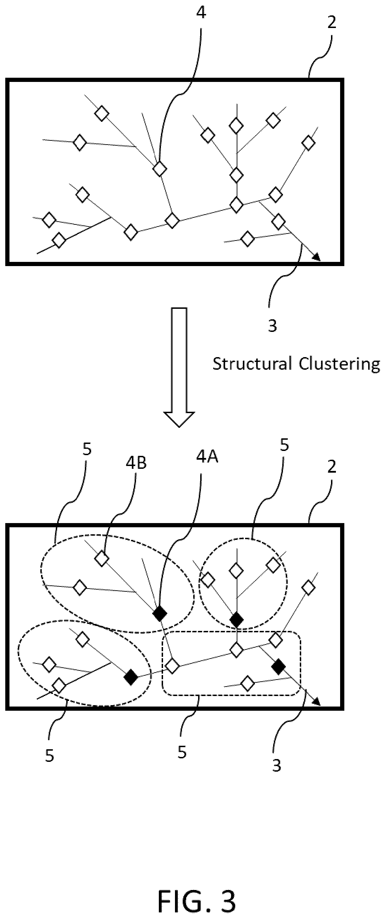

FIG. 3 shows an example of the clustering process of manhole 4 by the classification unit 102 in this embodiment. The classification unit 102 performs a clustering process using a technology such as structured clustering for each of the water level data of manhole 4 acquired by the data acquisition unit 101. This can, for example, result in classification into a plurality of clusters 5 (four clusters 5 in the example shown in FIG. 3) in the water level prediction target area 2.

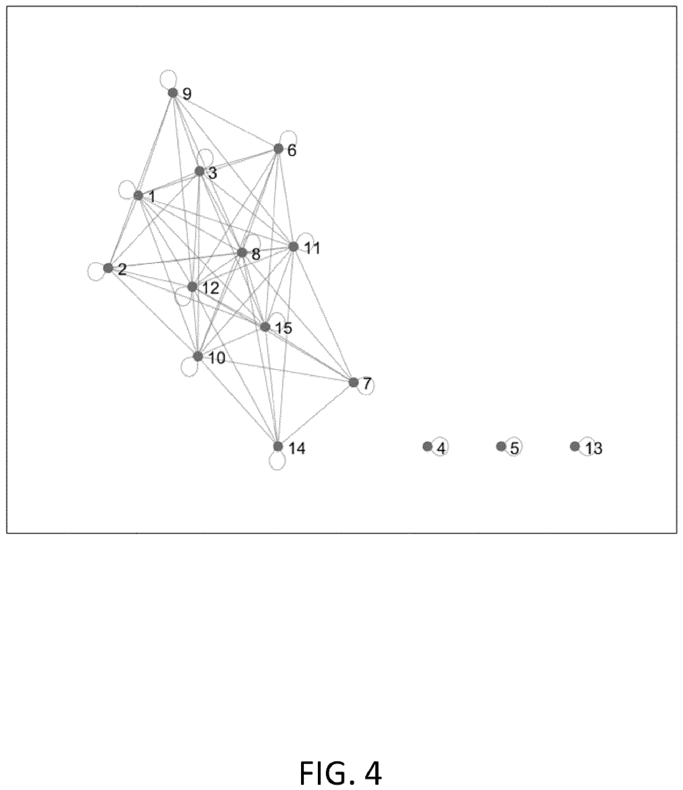

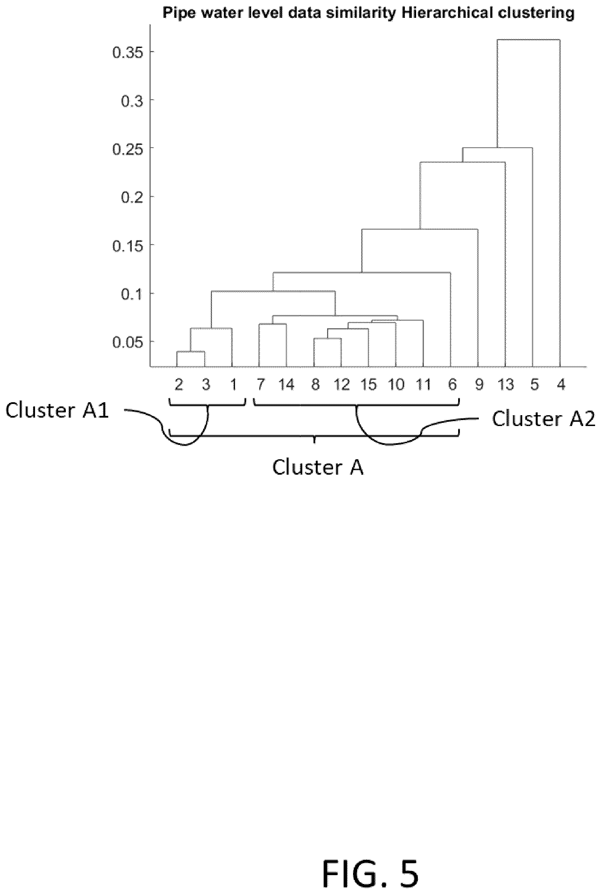

FIGS. 4 and 5 show an example of the results of the clustering process by the classification unit 102 in this embodiment. For example, when there are 15 manholes in the water level prediction target area 2, the results in FIGs. 4 and 5 show that manholes No. 4, 5, and 13 form a cluster independent of the other manholes. As shown in FIG. 5, the other manholes can also be classified into multiple clusters. For example, besides the three manholes mentioned earlier, the clustering method can classify manhole No. 9 as a standalone cluster and also classify it into Cluster A. Furthermore, within Cluster A, manhole No. 6 can be classified as a standalone cluster and also into subclusters Cluster A1 and Cluster A2. The granularity of the clusters can be set appropriately. For example, as described below, the granularity of these clusters may be determined based on the maximum number of placements of water level gauges that can be installed.

Decision unit 103 has the function of determining one or more representative manholes for each cluster from a plurality of manholes included in one or more clusters. For example, the decision unit 103 determines one or more representative manholes 4A for each cluster 5 based on the results of clustering by the classification unit 102, as shown in FIG. 3.

For example, as shown in FIGs. 4 and 5, manholes No. 4, 5, and 13 may be determined as representative manholes 4A where water level gauges should be installed. Since manholes No. 4, No. 5, and No. 13 are independent clusters from other manholes, it is difficult to estimate the water levels in these manholes from the results of other manholes. Therefore, as an optimization of the placement of water level gauges, these manholes are determined as representative manholes 4A.

The decision unit 103 may also determine representative manholes based on the clustering results when an upper limit is set for the number of placements of water level gauges. As shown in FIG. 5, for example, when the upper limit for the number of placement of water level gauges is 5, the decision unit 103 may determine, in addition to manholes No. 4, 5, and 13, which are independent of other clusters, manhole No. 9, which is the most isolated from other clusters from the top of the structured tree, and the manhole No. 8, which is the most adjacent from the bottom of the structured tree as the representative manholes. This will ensure the most effective placement, reflecting the clustering results.

Similarly, when the maximum number of placements of water level gauges is seven, then in addition to the above five manholes, manhole No. 1 in Cluster A1 and manhole No. 6 in Cluster A2 may be determined as representative manholes. The manholes No. 1 and No. 6 are the most isolated from the other manholes and therefore should be selected for greater accuracy.

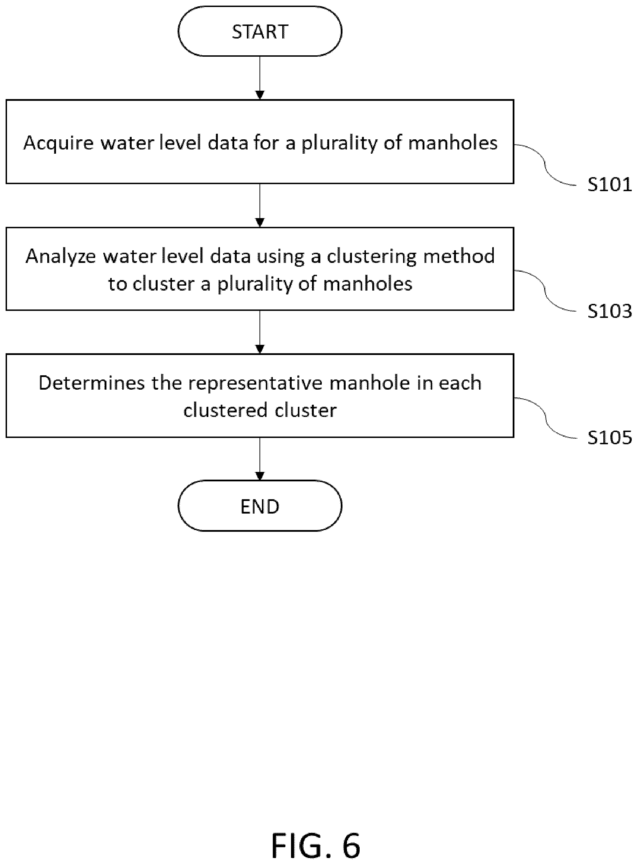

Next, the optimization process of the placement of water level gauges by the server 10 of this embodiment will be described. FIG. 6 is a flowchart showing an example of the flow of the optimization process of placement of water level gauges by the server 10 of this embodiment. First, in step S101, the data acquisition unit 101 of the server 10 acquires past water level data, etc. for a plurality of manholes. Then, in step S103, the classification unit 102 of the server 10 performs a clustering process on these water level data, etc., and classifies the plurality of manholes into one or more clusters. Then, in step S105, the decision unit 103 of the server 10 determines the representative manhole in each clustered cluster.

The first embodiment of this disclosure is described above. According to this embodiment, even if water level gauges are not installed in all of the manholes in the water level prediction target area 2, by installing a water level gauge in at least one of the manholes in each cluster as a representative manhole, it is possible to obtain sufficient data in the water level prediction for the manholes as described below. This enables effective water level monitoring and prediction even when there are restrictions in terms of cost and installation. In addition, by using precipitation (also called rainfall) data in the clustering process, it is possible to correlate changes in water levels with precipitation, thus enabling optimization that reflects the effects of precipitation.

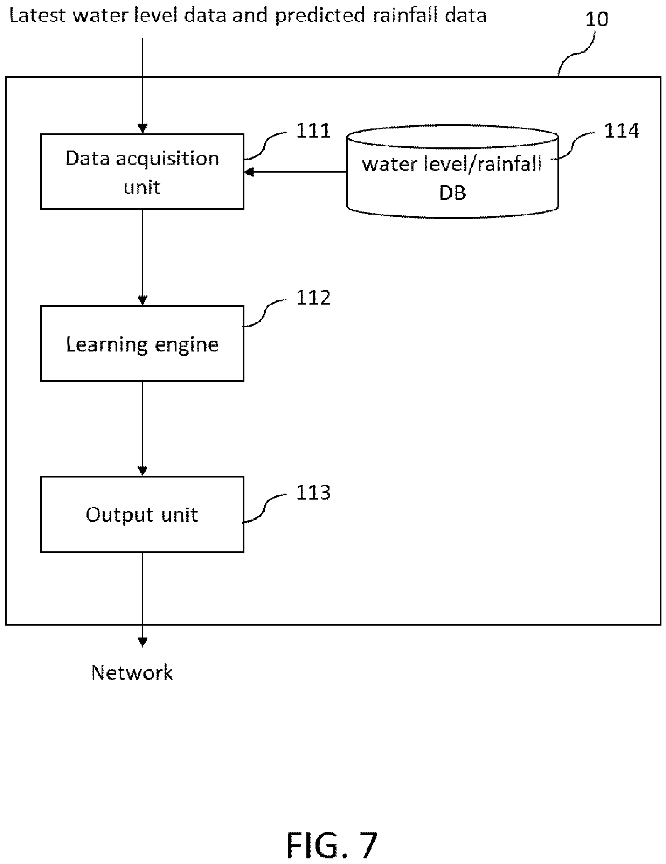

Next, the second embodiment of this disclosure will be described. FIG. 7 is a block diagram showing an example of the functional configuration of the server 10 for the second embodiment of this disclosure. As shown in FIG. 7, the server 10 for this embodiment has a data acquisition unit 111, a learning engine 112, an output unit 113, and a water level/rainfall DB (database) 114.

The data acquisition unit 111 has the function of acquiring past time-series water level data of one manhole in a predetermined area (water level prediction target area 2) and predicted rainfall data associated with the predetermined area. The data acquisition unit 111 can acquire, for example, the past time-series water level data of a manhole and the precipitation data pertaining to the manhole as data necessary for training the learning engine 112. The precipitation data pertaining to the manhole may be the same as the precipitation data described in the first embodiment. The data acquisition unit 111 may also acquire past time series of water level data for manholes adjacent to one manhole, as described below. The predicted rainfall data for a given area may be data obtained from, for example, the Japan Meteorological Agency, or data predicted from time to time by rain gauges, etc. installed in a given area as appropriate. Time-series water level data and rainfall data may be acquired every few minutes, for example. These data may be stored in the water level/rainfall DB 114 or may be obtained externally as appropriate.

The learning engine 112 is an engine with a learning model that uses the acquired current water level data of one of the manholes, the water level of a nearby manhole, and predicted future rainfall data as input values and calculates predicted future water level data as output values. The following is a description of the learning engine 112, which is divided into two parts: when training the learning model and when utilizing the prediction.

The data acquired during training of the learning model of the learning engine 112 may include not only historical time-series water level data and historical precipitation data, but also historical time-series water level data of manholes in proximity to the one manhole, for example. A manhole in proximity to one manhole can be, for example, a manhole at least one of the manholes upstream or downstream of the one manhole in the sewer pipe 3. These data can be combined into a single vector or other variable, for example, as a composite explanatory variable.

Then, using past water level data for the actual manhole, past water level data for nearby manholes, past cumulative precipitation data, and the resulting water level at a future point in time from that point in time for the manhole as training data, for example, a training model can be trained and generated by nonlinear multiple regression analysis, such as support vector regression, or by machine learning, such as neural networks. Such a learning model may be updated as appropriate during forecasting and utilization. Such training may utilize, for example, water level data and precipitation data obtained from the water level gauges of each manhole in the optimization of the placement of water level gauges in the above embodiment.

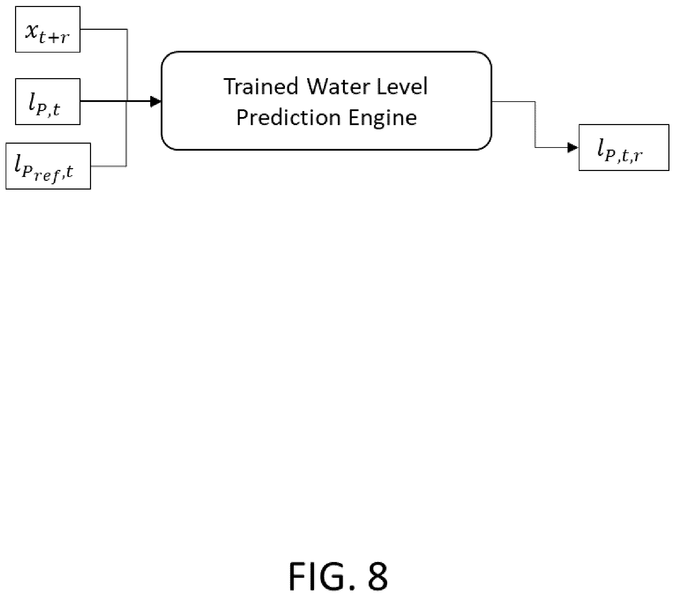

A learning engine (Trained Water Level Prediction Engine) based on a learning model trained on these data is used to calculate the predicted water level of a manhole at r minutes from the present time (r is any positive number). FIG. 8 shows an overview of the process of calculating the predicted value of the water level by the learning engine 112 in this embodiment. As shown in FIG. 8, the learning engine 112 can calculate the predicted value of water level IP,t,r of a manhole after r minutes using the past water level data IP,t of the manhole to be predicted, the past water level data iPref,t of a nearby manhole, and the expected precipitation data xt+r after r minutes. The learning engine 112 may or may not use historical precipitation data as input values. The predicted water level of such manholes may be calculated every few minutes, for example. The past water level data for nearby manholes may be obtained directly by water level gauges, or may be estimated based on the water level gauges of representative manholes determined using the technology of the first embodiment and the correlation between the water levels of nearby manholes and representative manholes obtained in the process of the clustering process. Even in the latter case, the accuracy of the prediction can be improved because it reflects time-series data.

The learning engine 112 may also use past water level data for one manhole to calculate predicted water levels for other manholes that are different from the one manhole. In this case, for example, the other manhole may be a manhole in close proximity to the one manhole. By using the correlation described above and the predicted water level of the representative manhole where a water level gauge is installed, it is possible to predict the water levels of nearby manholes where no water level gauge is installed.

The output unit 113 has the function of outputting the predicted information on the water level of one manhole at a future point in time calculated by the learning engine 112. That is, the output unit 113 can output the predicted water level of the manhole described above and information based on the predicted value (e.g., that the water level of the manhole is at a dangerous level, the magnitude of the water level change, etc.). This output forecast information can be transmitted, for example, to server 20 or information terminal 30.

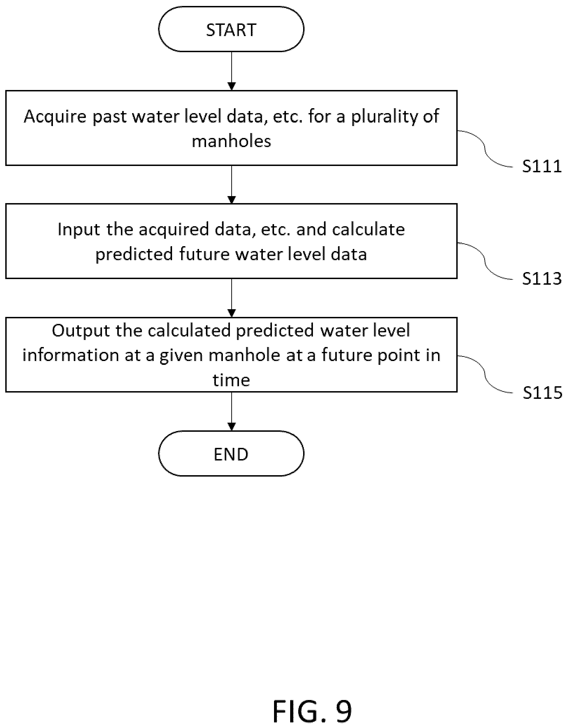

Next, the prediction process of water level in manholes by the server 10 of this embodiment will be explained. FIG. 9 is a flowchart showing an example of the flow of the prediction process of water levels of manholes by the server 10 of this embodiment. First, in step S111, the data acquisition unit 111 of the server 10 acquires past water level data, predicted rainfall data, etc. for a plurality of manholes. Next, in step S113, the learning engine 112 of the server 10 inputs the acquired data and calculates predicted future water level data for the manholes. Then, in step S115, the output unit 113 of the server 10 outputs the predicted water level information of the manholes based on the calculated predicted water level data.

The second embodiment of this disclosure is described above. According to this embodiment, the water level of manholes in the water level prediction target area 2 can be predicted simply by using a learning model that uses water level data of manholes and precipitation data, without using topographical information of the water level prediction target area 2 or model information about sewage pipes. Even if water level gauges are not installed in all of the manholes included in the water level prediction target area 2, it is possible to predict the water levels of not only the representative manhole but also the water levels of nearby manholes, for example, if the water level data of the representative manhole identified using the technology described in the first embodiment is available.

Although it is assumed in this embodiment above that the predicted rainfall data is used to predict the water level of a manhole, the technology is not limited to such examples. For example, the learning model of the learning engine 112 can be constructed without using forecast rainfall data, and the learning engine 112 can calculate the predicted water level of a manhole at a future point in time using past water level data of the manhole. This enables the prediction of water levels when rainfall does not need to be taken into account. In this embodiment above, the water level of manholes is predicted by the placement of water level gauges optimized by the technology of the first embodiment, but the technology is not limited to such examples. For example, even if all manholes are equipped with water level gauges, the technology of this embodiment is of course applicable.

The predicted precipitation data used to forecast water levels may be data obtained from the Japan Meteorological Agency or other organizations, or it may be processed predicted precipitation data as in the past. Generally, forecast precipitation data obtained from JMA and other organizations that provide weather data are provided at intervals (e.g., every 30 minutes), which can make it difficult to make forecasts for shorter time periods than the interval. Therefore, for example, precipitation data measured later than the time corresponding to the forecast precipitation data may be substituted as the forecast precipitation data. For example, if there is predicted precipitation data for 20 minutes ahead (i.e., 15:20) provided at 15:00, and the data is obtained by actually measuring precipitation at 15:20, the precipitation data measured at 15:20 may be used as the predicted precipitation data for 15:20 predicted at the 15:00. This allows for a more accurate prediction of the water level. The actual predicted precipitation data input to the learning engine 112 may be a net value, or it may be data with a margin given in the positive or negative direction from the predicted precipitation. For example, if the predicted precipitation is 30 mm, a 50% increase of 45 mm and a 50% decrease of 15 mm may be used as input values, respectively. This allows for volatility to be taken into account for information on water level forecasts.

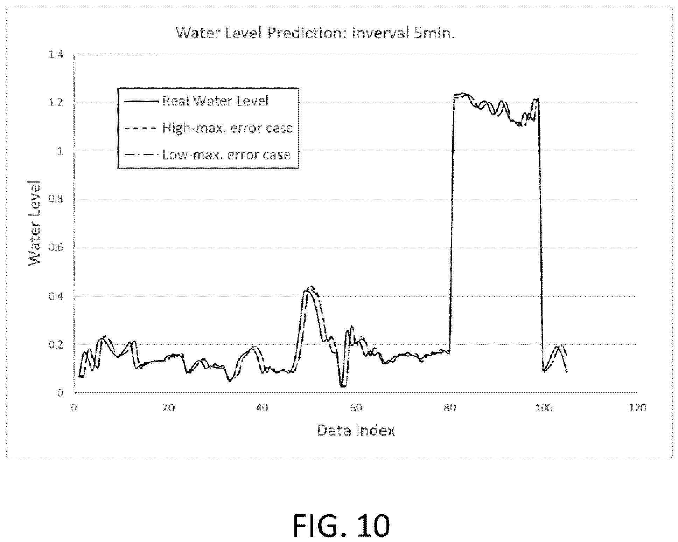

FIG. 10 is a graph illustrating one example of this embodiment. The solid line in FIG. 10 shows the actual water level, the dashed line is the predicted water level in the manhole obtained by inputting 50% more of the predicted rainfall data described above into the learning engine 112, and the single-dotted line is the predicted water level in the manhole obtained by inputting 50% less of the predicted rainfall data into the learning engine 112. As shown in this graph, the predicted rainfall data, the water level data for the manhole, and the water level data for manholes adjacent to the manhole in question are obtained at 5-minute intervals, and the actual measured values of the predicted water level and water level are output at 5-minute intervals. The predicted rainfall data is replaced by actual rainfall data as appropriate, as described above. As shown in the graph in FIG. 10, there is no significant deviation between the predicted water level and the actual measured water level, and they are in close agreement. Thus, the past water level data and predicted rainfall data for manholes can be used with the learning engine described above to predict the water level of manholes with a high degree of accuracy.

The information processing described above is realized by the collaboration of software and the hardware of server 10 described below. The hardware comprises described below can also be applied to server 20 and information terminal 30.

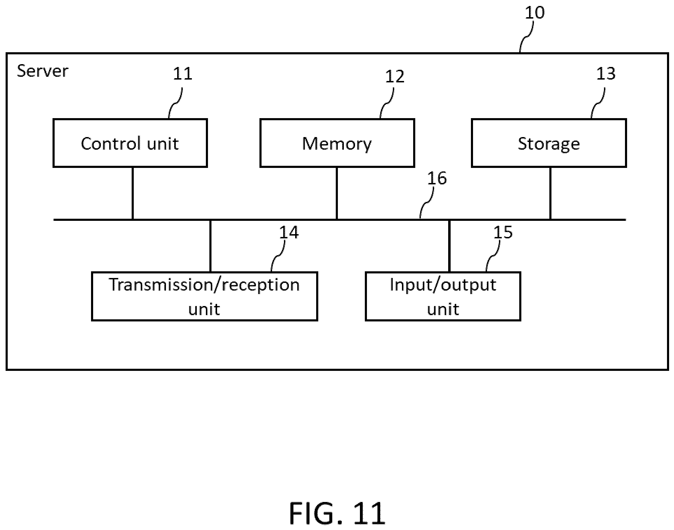

FIG. 11 shows an example of the hardware configuration of server 10 in this embodiment. As shown in FIG. 10, for example, server 10 has a control unit 11, memory 12, storage 13, transmission/reception unit 14, input/output unit 15, etc., which are electrically connected to each other through bus 16.

The control unit 11 is an arithmetic unit that controls the overall operation of the server 10, controls the transmission/reception of data between each element, and performs information processing necessary for application execution and authentication processes. For example, the control unit 11 is a CPU (Central Processing Unit) and/or GPU (Graphics Processing Unit), which executes programs for this system stored in storage 13 and deployed in memory 12 to perform various information processing as described above.

Memory 12 comprises main memory, which is volatile memory such as DRAM (Dynamic Random Access Memory), and auxiliary memory, which is nonvolatile memory such as flash memory and HDD (Hard Disc Drive). Memory 12 is used as a work area, etc. for control unit 11, and also stores BIOS (Basic Input / Output System), which is executed when server 10 is started, and various setting information, etc.

Storage 13 stores various programs such as application programs. A database storing data used for each process may be built in storage 13.

The transmission/reception unit 14 connects the server 10 to the network and/or blockchain network. The transmission/reception unit 14 may be equipped with Bluetooth (registered trademark) and BLE (Bluetooth Low Energy) short-range communication interfaces.

The input/output unit 15 comprises information input devices such as keyboards, microphones, and mice, as well as output devices such as displays and speakers.

Bus 16 is connected to each of the above elements and transmits, for example, address signals, data signals, and various control signals.

Information processing performed by external devices such as information processing device 10 may be in an on-premise form or in a cloud computing form. External devices in the cloud form may, for example, provide the functions and processing described above in the form of SaaS (Software as a Service) or cloud computing.

In the above embodiment, the information processing device 10 performed various types of storage and control, but a plurality of external devices may be used instead of the information processing device 10. That is, various information and programs may be distributed and stored in multiple external devices using blockchain technology or the like.

The above embodiment is not limited to the information processing system 1, but may be an information processing method or an information processing program. The information processing method includes each step of the information processing system 1. The information processing program runs at least one computer to execute each step of the information processing system 1.

Finally, various embodiments of this disclosure have been described, which are presented as examples and are not intended to limit the scope of the invention. The novel embodiments can be implemented in various other forms, and various omissions, substitutions, and modifications can be made to the extent that they do not depart from the gist of the invention. The embodiments and variations thereof are included in the scope and gist of the invention as well as within the scope of the invention and its equivalents described in the claims.

The following forms are also included in the scope of this disclosure.

### [Item 1]

A method for optimizing placements of water level gauges, comprising:
a data acquisition step for acquiring respective water level data acquired by respective water level gauges installed in a plurality of manholes in a predetermined region;
a classification step of classifying the plurality of manholes into one or more clusters by clustering the respective water level data; and
a decision step to determine, for each cluster, one or more representative manholes from the plurality of manholes included in the one or more clusters.

### [Item 2]

The method of optimizing the placements of water level gauges according to item 1,
wherein the decision step determines one or more representative manholes for each cluster based on the clustering results.

### [Item 3]

The method for optimizing the placements of water level gauges according to item 2,
wherein the clustering used in the classification step is hierarchical clustering; and
wherein, in the decision step, the one or more representative manholes are determined for each cluster based on the proximity by hierarchical clustering.

### [Item 4]

The method of optimizing the placements of water level gauges as in item 2 or 3,
wherein, in the decision step, the representative manhole is determined based on the result of the clustering when an upper limit is set for the number of placements of water level gauges.

### [Item 5]

The method for optimizing the placements of water level gauges as in any one of items 1 to 4, wherein, in the data acquisition step, precipitation data pertaining to the manhole is further acquired; and
wherein, in the classification step, clustering is performed using the precipitation data and the respective water level data.

### [Item 6]

The method for optimizing the placements of water level gauges as in any one of items 1 to 5,
wherein the water level data is a time series of water level data.

### [Item 7]

A method for predicting water levels in manholes, comprising:
a past data acquisition step of acquiring past time-series water level data of one manhole to be installed in a predetermined region and predicted rainfall data for the predetermined region; and
an output step for outputting predicted information on the water level of the one manhole at a future point in time by inputting the acquired past time-series water level data of the one manhole and the predicted rainfall data into a predetermined engine.

### [Item 8]

The method of predicting the water level of a manhole according to item 7,
wherein, in the past data acquisition step, it further acquires past time series of water level data of other manholes in proximity to the one manhole; and
wherein, in the output step, the past time-series water level data of the other manhole is input to the predetermined engine.

### [Item 9]

The method for predicting water levels in manholes as in item 7 or 8,
wherein the past time series of water level data includes estimated water level data estimated based on water level data acquired by a water level gauge installed in a manhole different from the one manhole.

### [Item 10]

The method of predicting the water level of a manhole as in any one of items 7-9,
wherein the predetermined engine is an engine based on a learning model obtained by learning using at least the past time series of water level data for the one manhole and the past rainfall data for the target area.

### [Item 11]

The method for predicting the water level of a manhole according to item 10,
wherein the predetermined engine is further obtained by learning using past time series of water level data of other manholes in close proximity to the one manhole.

### [Item 12]

The method for predicting the water level of a manhole as in any one of items 7-11,
wherein, in the output step, the method outputs, together with or instead of the one manhole, prediction information on the water level at a future point in time of a manhole of another manhole included in the target area.

### [Item 13]

A system for predicting water levels in manholes, comprising:
a past data acquisition unit for acquiring past time series of water level data of one manhole included in a target area and forecast rainfall data pertaining to the predetermined area;
an output unit for outputting predictive information of the water level of the manhole at a future point in time by inputting the acquired past time series of the water level data of the manhole and the predicted rainfall data into a predetermined engine.

### [DESCRIPTION OF REFERENCE NUMERALS]

10 Server
20 Servers
30 Information terminal
101 Data acquisition unit
102 Classification unit
103 Decision unit
111 Data acquisition unit
112 Learning engine
113 Output unit

## Claims

1. A method for predicting water levels in manholes, comprising:
a past data acquisition step of acquiring past time-series water level data of one manhole to be installed in a predetermined region and predicted rainfall data for the predetermined region; and
an output step for outputting predicted information on the water level of the one manhole at a future point in time by inputting the acquired past time-series water level data of the one manhole and the predicted rainfall data into a predetermined engine.

2. The method of predicting the water level of a manhole according to claim 1,
wherein, in the past data acquisition step, it further acquires past time series of water level data of other manholes in proximity to the one manhole; and
wherein, in the output step, the past time-series water level data of the other manhole is input to the predetermined engine.

3. The method for predicting water levels in manholes as in claim 1 or 2,
wherein the past time series of water level data includes estimated water level data estimated based on water level data acquired by a water level gauge installed in a manhole different from the one manhole.

4. The method of predicting the water level of a manhole as in any one of claims 1-3,
wherein the predetermined engine is an engine based on a learning model obtained by learning using at least the past time series of water level data for the one manhole and the past rainfall data for the target area.

5. The method for predicting the water level of a manhole according to claim 4,
wherein the predetermined engine is further obtained by learning using past time series of water level data of other manholes in close proximity to the one manhole.

6. The method for predicting the water level of a manhole as in any one of claims 1-5,
wherein, in the output step, the method outputs, together with or instead of the one manhole, prediction information on the water level at a future point in time of a manhole of another manhole included in the target area.

7. A system for predicting water levels in manholes, comprising:
a past data acquisition unit for acquiring past time series of water level data of one manhole included in a target area and forecast rainfall data pertaining to the predetermined area;
an output unit for outputting predictive information of the water level of the manhole at a future point in time by inputting the acquired past time series of the water level data of the manhole and the predicted rainfall data into a predetermined engine.
